# FASCICULE DE BREVET EUROPEEN

(11) **EP 4 031 792 B1**
(45) Date de publication et mention de la délivrance du brevet: **11.02.2026**
(21) Numéro de dépôt: 20767838.4
(22) Date de dépôt: 10.09.2020
(51) Int. Cl.: F16L 55/28, F16L 55/34, F16L 101/30

(54) **ROBOT D'EXPLORATION DE CONDUIT COMPRENANT UN SYSTÈME DE POSITIONNEMENT**
KANALSUCHROBOTER MIT POSITIONIERUNGSSYSTEM
CONDUIT EXPLORATION ROBOT COMPRISING A POSITIONING SYSTEM

(30) Priorité: 16.09.2019 FR 1910181
(43) Date de publication de la demande: 27.07.2022
(73) Titulaire: Autonomous Clean Water Appliance (ACWA) Robotics, 20140 Petreto-Bicchisano (FR)
(72) Inventeur: ROSSI, Jean-François, 20200 VILLE DI PIETRABUGNO (FR)
(74) Mandataire: Hautier IP
(86) Numéro de dépôt international: PCT/EP2020/075400
(87) Numéro de publication internationale: WO 2021/052868

(56) Documents cités:
- WO-A1-2017/197418
- CN-U- 204 986 220
- DE-A1- 102015 106 333
- US-A1- 2012 215 348

## Description

### DOMAINE TECHNIQUE

La présente invention concerne le domaine des robots d'exploration de conduit. Elle trouve pour application particulièrement avantageuse le domaine des robots d'exploration de conduit mettant en œuvre un déplacement pas à pas.

### ÉTAT DE LA TECHNIQUE

Les réseaux d'adduction d'eau sont constitués de canalisations majoritairement enterrées, formées par assemblage de sections cylindriques. Les réseaux d'adduction d'eau constituent des infrastructures à grande échelle. Par exemple, pour un pays comme la France, l'ensemble de ces réseaux avoisine le million de kilomètres linéaires. À l'échelle mondiale, on estime leur taille à 30 millions de kilomètres linéaires, et ces réseaux se développent chaque jour.

Ces réseaux sont très complexes. Ils comprennent de nombreux éléments dont des unités de captation et de traitement, des réservoirs et des retenues, des unités de relevage, des maillages et des interconnexions, ainsi que des canalisations et des raccordements.

Parmi ces éléments, les canalisations constituent, en linéaire, la majeure partie des réseaux d'adduction d'eau. Ces canalisations sont très hétérogènes. En effet, sur un même territoire peuvent cohabiter des portions de réseaux neuves et d'autres âgées de jusqu'à un, voire deux siècles. Ceci peut engendrer des différences importantes entre les canalisations, notamment en termes de matériaux constitutifs, de techniques de pose, de rythme de renouvellement et de procédures d'entretien.

En outre, les conditions d'utilisation de ces canalisations peuvent être rudes. Leur pression interne est généralement comprise entre 3 et 20 bars, et la vitesse courante d'écoulement d'eau peut aller jusqu'à 2, voire 4 m/s.

Les canalisations sont par conséquent susceptibles de se dégrader. Les causes de dégradation sont nombreuses, et notamment des chocs extérieurs, par exemple lors de chantiers ou dus au passage de véhicules, des chocs liés au fonctionnement du réseau d'eau, par exemple dans les phases de coupure et de remise en eau et en cas de fortes variations de pression, une abrasion interne causée par la présence de minéraux dans l'eau transportée, une corrosion et des intrusions de végétaux.

Ces dégradations entraînent des problèmes récurrents d'approvisionnement en eau potable. Notamment, on estime à 20 à 40% la perte d'eau transportée entre le point de prélèvement et le point de livraison. Afin d'augmenter le rendement de ces canalisation, il faudrait pouvoir les inspecter, afin de détecter toute dégradation en vue d'une réparation.

Toutefois, la documentation disponible sur ces canalisations est généralement insuffisante, et notamment en milieu rural. Il faut donc en outre pouvoir les cartographier, afin d'effectuer leur maintenance.

Or, le réseau doit fonctionner de façon continue. Toutes les opérations créant une indisponibilité doivent être programmées et limitées en temps et en fréquence. Il est donc difficile de mettre en place suffisamment d'interventions humaines, qui vont perturber le fonctionnement du réseau d'adduction d'eau, pour réaliser ces opérations de cartographie et d'inspection.

Une solution est de parcourir de l'intérieur ces canalisations. Pour cela, il existe des robots d'exploration de conduit. Ainsi, ces robots visent à explorer des conduits, tels que des canalisations des réseaux d'adduction, afin de recueillir les informations pour les cartographier, voire les inspecter pour détecter une éventuelle dégradation. Cette exploration peut en outre être réalisée sans qu'il y ait de coupure de distribution par le réseau. Ces robots sont donc destinés à être exposés aux conditions d'utilisation des canalisations. Ils peuvent notamment se retrouver sous pression et devoir se déplacer avec ou contre l'écoulement de l'eau, dans des conduits plus ou moins sinueux. Il est donc préférable que les modalités de déplacement de ces robots soient adaptées à ces conditions, et qu'ils puissent s'orienter dans des canalisations de d'architecture inconnue.

Il est notamment connu du document WO 2012/112835 A1, un robot au moins en partie orientable pour sa progression dans des conduits sinueux. Pour cela, le robot comprend deux bâtis reliés par une articulation, permettant au robot de progresser au niveau de coudes dans les conduits.

Cette articulation comprend plusieurs portions, dont la rotation autour d'un axe longitudinal au robot permet de changer la configuration angulaire de l'articulation et ainsi d'orienter une partie du robot. Cette rotation peut en outre être actionnée par le robot afin de faciliter l'exploration des canalisations. Le robot est translatable selon l'axe longitudinal au conduit par le biais de roues à chenilles ou d'hélices.

L'orientation d'au moins une partie du robot par cette articulation reste toutefois complexe, et peut être longue à ajuster. En outre, la translation du robot par un système roulant peut être difficile à mettre en œuvre avec la vitesse d'écoulement d'eau et des conditions d'adhérence défavorables des parois des conduits.

Le document WO 2017/197418 A1 décrit un robot destiné à progresser dans un tube, comprenant une pluralité de bâtis, et un système de positionnement entre deux bâtis consécutifs. Le système de positionnement comprend une pluralité d'actionneurs linéaires formant un hexapode. Ce système de positionnement reste complexe et son efficacité pour la progression du robot dans le conduit est limitée.

Le document DE 10 2015 106333 A1 décrit un robot apte à progresser dans des tuyaux. Pour cela, le robot comprend un système de positionnement comprenant des soufflets extensibles et compressibles indépendamment. Ce système de positionnement est difficile à mettre en œuvre et offre une mobilité limitée.

Le document CN204986220U décrit un mécanisme d'exploration de conduite comprenant deux actionneurs linéaires mobiles en rotation par rapport à deux supports, et un organe de fixation à la paroi de la conduite.

Un objet de la présente invention est donc d'améliorer la mobilité générale d'un robot d'exploration de conduit. Plus particulièrement, un objectif non limitatif est d'améliorer la mobilité entre deux bâtis du robot, notamment afin d'explorer des conduits plus ou moins sinueux.

Les autres objets, caractéristiques et avantages de la présente invention apparaîtront à l'examen de la description suivante et des dessins d'accompagnement. Il est entendu que d'autres avantages peuvent être incorporés.

### RÉSUMÉ

Pour atteindre cet objectif, selon un mode de réalisation on prévoit un robot d'exploration de conduit selon la revendication 1.

Ainsi, un déplacement relatif en translation de la première paire d'actionneurs linéaires permet à la fois la translation et l'orientation relatives du premier bâti et du deuxième bâti. L'un parmi le premier bâti et le deuxième bâti peut être translaté et orienté relativement à l'autre parmi le premier bâti et le deuxième bâti dans un espace délimité par la capacité d'extension d'au moins un actionneur linéaire de la première paire, et par l'au moins un secteur angulaire de liberté en rotation de l'au moins un actionneur. L'un parmi le premier bâti et le deuxième bâti peut ainsi être placé avec précision à un endroit du conduit, par exemple pour la progression du robot dans un conduit sinueux. La mobilité entre le premier bâti et le deuxième bâti est ainsi améliorée.

En outre, la translation et l'orientation de ce bâti peuvent être adaptées en fonction de la sinuosité du conduit. Lorsque le conduit est peu sinueux, la première paire d'actionneurs linéaires peut être déployée sur une grande distance par rapport à leur capacité d'extension, permettant une exploration rapide du conduit par le robot. Le déplacement relatif en translation des actionneurs linéaires de la première paire peut être effectué sur une faible distance par rapport à leur capacité d'extension, permettant l'orientation précise de ce bâti et l'exploration de conduits sinueux. Le déplacement du robot peut donc être adapté au conduit, ce qui peut permettre une exploration efficace des canalisations.

Le système de positionnement comprend une deuxième paire d'actionneurs linéaires, disposés selon une direction parallèle à l'axe longitudinal du robot, indépendamment actionnables en translation selon l'axe longitudinal de chaque actionneur linéaire de la deuxième paire. Les actionneurs linéaires de la deuxième paire sont configurés de façon à être libres en rotation, sur au moins un secteur angulaire, relativement à au moins l'un parmi le premier bâti et le deuxième bâti, autour d'un axe perpendiculaire à l'axe longitudinal du robot.

Le système de positionnement comprend en outre un support intermédiaire, la première paire d'actionneurs linéaires étant montée sur le premier bâti par une première portion, la deuxième paire d'actionneurs linéaires étant montée sur le deuxième bâti par une première portion, la première paire et la deuxième paire d'actionneurs linéaires pouvant chacune être montée sur le support intermédiaire par une deuxième portion. La première paire et la deuxième paire d'actionneurs linéaires sont montées sur le support intermédiaire de sorte que la première paire et la deuxième paire d'actionneurs linéaires sont disposées de part et d'autre du support intermédiaire, selon une direction parallèle à l'axe longitudinal du robot. L'utilisation d'un support intermédiaire entre la première paire et la deuxième paire d'actionneur linéaire permet d'exploiter au moins en partie la capacité d'extension d'au moins un actionneur linéaire de chaque paire, afin d'augmenter l'espace dans lequel l'un parmi le premier bâti et le deuxième bâti peut être translaté et orienté, dans une direction parallèle à l'axe longitudinal du robot.

Selon un exemple, le support comprend une première base et une deuxième base, la première paire d'actionneurs linéaires étant montée sur la première base et la deuxième paire d'actionneurs linéaires étant montée sur la deuxième base. Le support peut en outre être configuré de sorte que la longueur du système de positionnement selon l'axe longitudinal du robot soit inférieure à la somme des longueurs d'au moins un actionneur de la première paire et d'au moins un actionneur de la deuxième paire. Ainsi, le volume du système de positionnement, selon l'axe longitudinal du robot, peut être réduit, tout en permettant d'exploiter au moins en partie la capacité d'extension d'au moins un actionneur linéaire de chaque paire.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants.
- La figure 1 représente une vue assemblée et en perspective du robot d'exploration de conduit selon un mode de réalisation de l'invention.
- La figure 2 représente une vue assemblée et du dessus du robot illustré en figure 1.
- La figure 3 représente une vue assemblée et en perspective d'une partie du robot illustré en figure 1, comprenant le système de positionnement dans une configuration rétractée.
- La figure 4 représente une vue assemblée et en perspective de la partie du robot, illustrée en figure 3, dans une configuration déployée.
- La figure 5 représente une vue assemblée et du dessus de la partie du robot, illustrée en figure 3, dans une configuration où une première paire d'actionneurs et une deuxième paire d'actionneurs sont indépendamment actionnés.
- La figure 6 représente une vue assemblée et en perspective de la partie du robot dans la configuration illustrée en figure 5.
- La figure 7 représente une vue en perspective d'un support intermédiaire du robot illustré en figure 1.
- La figure 8 représente une vue du dessus du support intermédiaire illustré en figure 7.
- La figure 9 représente une vue selon l'axe longitudinal du robot illustré en figure 1, du support intermédiaire illustré en figure 7.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, le système de positionnement peut être configuré au moins de façon à positionner l'un parmi le premier bâti et le deuxième bâti, l'un parmi le premier bâti et le deuxième bâti étant dans la configuration de dégagement de la portion d'appui, relativement à l'autre parmi le premier bâti et le deuxième bâti, l'autre parmi le premier bâti et le deuxième bâti étant dans la configuration d'engagement de la portion d'appui. Ainsi, selon quel bâti parmi le premier bâti et le deuxième bâti est dans la configuration d'engagement de la portion d'appui, la translation et l'orientation du bâti dans la configuration de dégagement peuvent être effectuées de sorte que le robot soit mobile dans la direction longitudinale au conduit, en marche avant ou en marche arrière. Cela améliore ainsi la mobilité du robot, et permet de faciliter l'exploration d'un réseau de conduits, notamment lorsque son architecture est inconnue.

Selon un exemple, chaque actionneur linéaire de ladite première paire peut être libre en rotation, sur au moins un secteur angulaire, relativement au premier bâti et au deuxième bâti, selon au moins une direction perpendiculaire à l'axe longitudinal du robot. Ainsi, le secteur angulaire de liberté en rotation de chaque actionneur de la première paire peut être augmenté. L'espace dans lequel l'un parmi le premier bâti et le deuxième bâti peut être translaté et orienté peut donc être augmenté, permettant d'améliorer la mobilité entre le premier bâti et le deuxième bâti du robot.

Selon un exemple, chaque actionneur linéaire de la première paire peut comprendre au moins une articulation comprenant au moins une liaison pivot selon un axe perpendiculaire à l'axe longitudinal du robot, de façon à permettre un mouvement de rotation, sur au moins un secteur angulaire, de chaque actionneur linéaire de la première paire, autour de l'axe perpendiculaire à l'axe longitudinal du robot, relativement à au moins l'un parmi le premier bâti et le deuxième bâti, voire relativement au premier bâti et au deuxième bâti.

Selon un exemple, au moins l'un parmi le premier bâti et le deuxième bâti peut comprendre un socle, la première paire d'actionneurs étant reliée à au moins l'un parmi le premier bâti et le deuxième bâti par l'intermédiaire du socle. De préférence, le premier bâti et le deuxième bâti comprennent chacun un socle, la première paire d'actionneurs étant reliée à au moins l'un parmi le premier bâti et le deuxième bâti par l'intermédiaire du socle.

Selon un exemple, le socle peut être configuré de façon à être mobile selon un mouvement de rotation autour d'un axe parallèle à l'axe longitudinal du robot, sur au moins un intervalle angulaire. Ainsi, le système de positionnement peut être entraîné en rotation autour de l'axe longitudinal du robot, sur cet intervalle angulaire. Le mouvement de rotation du socle peut plus particulièrement être actionné par un moteur. En outre, l'intervalle angulaire est de préférence compris entre 30° et 120°, plus préférentiellement l'intervalle angulaire est sensiblement égal à 90°.

En outre, chaque actionneur linéaire de la deuxième paire peut comprendre au moins une articulation comprenant au moins une liaison pivot selon un axe perpendiculaire à l'axe longitudinal du robot, de façon à permettre un mouvement de rotation, sur au moins un secteur angulaire, de chaque actionneur linéaire de la deuxième paire, autour de l'axe perpendiculaire à l'axe longitudinal du robot, relativement à au moins l'un parmi le premier bâti et le deuxième bâti, voire relativement au premier bâti et au deuxième bâti.

Selon un exemple, la première paire d'actionneurs linéaires est disposée dans un premier plan et la deuxième paire d'actionneurs linéaires est disposée dans un deuxième plan, le premier plan étant distinct du deuxième plan.

L'utilisation de deux paires d'actionneurs linéaires disposés dans deux plans distincts permet la translation et l'orientation relatives du premier bâti et du deuxième bâti dans un espace en trois dimensions, délimité par la capacité d'extension d'au moins un actionneur linéaire de chaque paire, et par au moins un secteur angulaire de liberté en rotation de l'au moins un actionneur de chaque paire, relativement à au moins l'un parmi le premier bâti et le deuxième bâti. Plus particulièrement, l'un parmi le premier bâti et le deuxième bâti peut être translaté et orienté dans un cône à section ellipsoïdal, de droite génératrice parallèle à l'axe longitudinal du robot et le sommet étant un point à l'intersection entre le premier plan et le deuxième plan.

Selon cet exemple, le premier plan et le deuxième plan peuvent plus particulièrement être perpendiculaires. Ainsi, l'un parmi le premier bâti et le deuxième bâti peut être translaté et orienté dans un cône à section circulaire. L'espace dans lequel l'un parmi le premier bâti et le deuxième bâti peut être translaté et orienté, est donc maximisé dans l'ensemble des directions perpendiculaires à l'axe longitudinal du robot.

De préférence, la première paire d'actionneurs linéaires peut être montée sur le premier bâti par une première extrémité. En outre, la deuxième paire d'actionneurs linéaires peut être montée sur le deuxième bâti par une première extrémité. La première paire et la deuxième paire d'actionneurs linéaires peuvent chacune être montée sur le support intermédiaire par une deuxième extrémité.

Selon un exemple, au moins une parmi la première paire et la deuxième paire d'actionneurs linéaires peut être montée sur le support intermédiaire, de façon à être libre en rotation sur au moins un secteur angulaire relativement au support intermédiaire, autour d'un axe perpendiculaire à l'axe longitudinal du robot.

Plus particulièrement, chaque actionneur d'au moins une parmi la première paire et la deuxième paire peut être montée sur le support intermédiaire par une articulation, cette articulation comprenant au moins une liaison pivot selon un axe perpendiculaire à l'axe longitudinal du robot. Cette articulation permet ainsi un mouvement de rotation sur au moins un secteur angulaire, de chaque actionneur d'au moins une parmi la première paire et la deuxième paire, relativement au support intermédiaire, autour de l'axe perpendiculaire à l'axe longitudinal du robot.

Selon un exemple, le support peut être configuré de sorte qu'au moins une parmi la première paire et la deuxième paire d'actionneurs linéaires est libre en rotation, sur l'au moins un secteur angulaire, relativement au support intermédiaire. Le robot selon ce mode de réalisation particulier permet d'augmenter l'espace dans lequel l'un parmi le premier bâti et le deuxième bâti peut être translaté et orienté, dans une direction perpendiculaire à l'axe longitudinal du robot. Un gain en flexibilité du système de positionnement peut ainsi être obtenu, facilitant l'exploration de conduits sinueux par le robot.

De préférence, le support peut être configuré de sorte que la première paire et la deuxième paire d'actionneurs linéaires sont libres en rotation, sur au moins un secteur angulaire, relativement au support intermédiaire, autour d'un axe perpendiculaire à l'axe longitudinal du robot.

Plus particulièrement, le support peut comprendre une pluralité d'ouvertures configurées de façon à permettre le passage de chaque actionneur linéaire d'au moins une parmi la première paire et la deuxième paire, lors d'un mouvement de rotation, sur l'au moins un secteur angulaire, relativement au support intermédiaire, autour de l'axe perpendiculaire à l'axe longitudinal du robot.

Selon un exemple, le robot peut en outre comprendre un dispositif de mesure, propre à mesurer l'orientation du conduit.

Selon un exemple, le robot peut en outre comprendre un régulateur configuré pour actionner indépendamment chaque actionneur linéaire de l'au moins une première paire. Le régulateur peut en outre être configuré pour contrôler un actionnement indépendant de chaque actionneur linéaire de la deuxième paire.

Ainsi, au moins l'un parmi le premier bâti et le deuxième bâti peut être translaté et orienté de façon autonome par le robot.

Il est précisé que dans le cadre de la présente invention, le terme « portion d'appui » désigne une portion du robot, et plus particulièrement d'un module de prise d'appui, destinée à être en appui sur la paroi d'un conduit.

Par « indépendamment actionnables en translation », on entend que les actionneurs linéaires de la première paire, voire de la deuxième paire, sont chacun actionnables en translation de manière indépendante, c'est-à-dire que l'actionnement en translation d'un actionneur linéaire n'implique pas nécessairement l'actionnement en translation d'un autre actionneur linéaire de la même paire, voire de l'autre paire.

L'axe longitudinal x du robot, correspond à un axe passant par les centres du premier bâti et du deuxième bâti, lorsque le premier bâti et le deuxième bâti sont alignés. Lorsque le premier bâti et le deuxième bâti ne sont pas alignés, l'axe longitudinal du robot peut être divisé en deux axes longitudinaux x et x', l'axe longitudinal x étant l'axe longitudinal du premier bâti, et l'axe longitudinal x' étant l'axe longitudinal du deuxième bâti.

Lorsque qu'un axe est « parallèle » à un autre axe ou à une direction, cet axe peut être parallèle à, ou confondu avec, l'autre axe ou à la direction considérée.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

Le robot d'exploration de conduit, selon un mode de réalisation exemplatif de l'invention, est maintenant décrit.

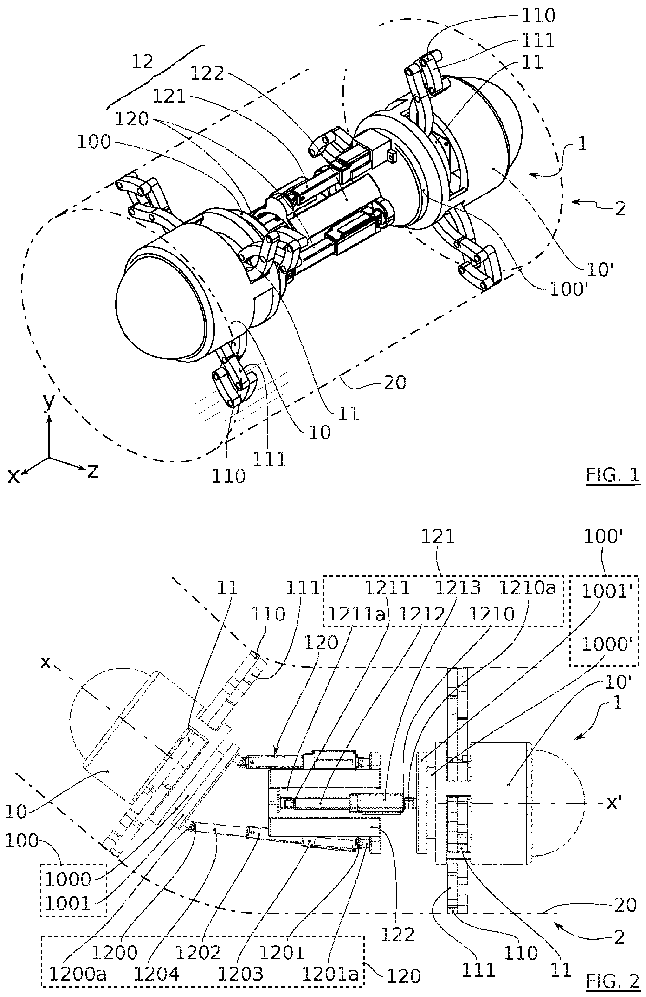

Selon ce mode de réalisation, et comme illustré par les figures 1 et 2, le robot 1 comprend un premier bâti 10 et un deuxième bâti 10'. Le premier bâti 10 et le deuxième bâti 10' comprenant un module d'appui 11. Le module d'appui 11 est configuré pour mettre en appui au moins l'un parmi le premier bâti 10 et le deuxième bâti 10' sur une paroi 20 d'un conduit 2, par l'intermédiaire d'une portion d'appui 110 applicable sur la paroi 20. Plus particulièrement, le module de prise d'appui 11 peut être configuré pour passer alternativement d'une configuration d'engagement de la portion d'appui 110, à une configuration de dégagement de la portion d'appui 110.

Le robot 1 comprend en outre un système de positionnement 12, reliant le premier bâti 10 et le deuxième bâti 10'. Le système de positionnement est configuré pour permettre le positionnement relatif du premier bâti 10 et du deuxième bâti 10'.

Le robot 1 peut mettre en œuvre un déplacement de type pas à pas dont la cinématique est maintenant décrite pour une marche avant du robot 1, selon l'axe longitudinal du conduit 2. Selon ce mode de réalisation, afin de permettre la progression du robot 1 en marche avant, la cinématique de déplacement peut être décrite en deux phases principales : une phase de déploiement et une phase de rétractation.

Lors de la phase de déploiement, le module de prise d'appui 11 du deuxième bâti 10' est dans la configuration d'engagement de la portion d'appui 110. Le deuxième bâti 10' est donc fixe par rapport au conduit 2. Le module de prise d'appui 11 du premier bâti 10 est en outre dans la configuration de dégagement de la portion d'appui 110. Le système de positionnement 12 peut être actionné de façon à positionner le premier bâti 10 relativement au deuxième bâti 10'. Par exemple, le premier bâti 10 est éloigné du deuxième bâti 10' selon l'axe longitudinal du conduit 2, confondu avec l'axe longitudinal x du robot 1 dans la figure 1. Lorsque le premier bâti 10 est ainsi positionné, le deuxième bâti 10' étant toujours dans la configuration d'engagement de la portion d'appui 110, le module de prise d'appui 11 du premier bâti 10 peut être passé dans la configuration d'engagement. Le premier bâti 10 est ainsi fixe par rapport au conduit 2.

Lors de la phase de rétractation, le module 11 du deuxième bâti 10' peut être passé dans la configuration de dégagement. Le système de positionnement 12 peut être actionné de façon à positionner le deuxième bâti 10' relativement au premier bâti 10. Par exemple, le deuxième bâti 10' est rapproché du premier bâti 10 selon l'axe longitudinal du conduit 2. Lorsque le deuxième bâti 10' est ainsi positionné, le premier bâti 10 étant toujours dans la configuration d'engagement de la portion d'appui 110, le module de prise d'appui 11 du deuxième bâti 10' peut être passé dans la configuration d'engagement. Le deuxième bâti 10' est ainsi fixe par rapport au conduit 2.

Ces phases de déploiement et de rétractation peuvent se succéder afin de permettre la progression du robot. Notons que selon quel bâti parmi le premier bâti 10 et le deuxième bâti 10' est dans la configuration de dégagement au début du mouvement, le déplacement du robot 1 peut être effectué selon l'axe longitudinal du robot 1, et plus particulièrement selon l'axe longitudinal du conduit, en marche avant ou en marche arrière. Le robot 1 peut ainsi explorer un réseau de conduits, par exemple il peut revenir en arrière lorsqu'il rencontre une impasse. Le robot 1 peut en outre retourner à son point de départ, par exemple le point d'introduction du robot 1 dans le conduit 2, pour être récupéré. Ainsi, une exploration des canalisations peut être effectuée même lorsque le nombre de points d'accès à ces canalisations est limité.

Dans la suite de la description, la progression du robot 1 est décrite selon un déplacement en marche avant. Il est entendu que les caractéristiques décrites sont applicables également pour un déplacement en marche arrière. Plus particulièrement, le positionnement du premier bâti 10 décrit par la suite peut s'appliquer au deuxième bâti 10'.

Pour qu'au moins l'un parmi les premier bâti 10 et deuxième bâti 10' soit passé alternativement de la configuration d'engagement à la configuration de dégagement, le module d'appui 11 peut être doté de plusieurs bras articulés 111, chaque bras articulé 111 comprenant la portion d'appui 110. La portion d'appui 110 peut en outre être déplacée par un mouvement d'un bras articulé 110. Dans la configuration d'engagement, chaque bras articulé 111 est plus déployé que dans ladite configuration de dégagement.

Comme illustré en figure 2, le système de positionnement 12 est configuré de façon à pouvoir translater et orienter le premier bâti 10 relativement au deuxième bâti 10', de sorte que le premier bâti 10 est placé à un endroit précis du conduit. Ainsi, la progression du robot dans un conduit sinueux ou à une ramification d'une canalisation est possible.

Pour cela, le système de positionnement 12 comprend au moins une première paire 120 d'actionneurs linéaires, et de préférence une première paire 120 et une deuxième paire 121 d'actionneurs linéaires. Dans la suite, sauf mention contraire, on considère le mode de réalisation particulier selon lequel le système de positionnement 12 comprend une première paire 120 et une deuxième paire 121 d'actionneurs linéaires.

Selon cet exemple, la première paire 120 et la deuxième paire 121 d'actionneurs linéaires sont configurées de sorte qu'un déplacement relatif des actionneurs linéaires d'au moins l'une parmi la première paire 120 et la deuxième paire 121, permet à la fois la translation et l'orientation relatives du premier bâti 10 et du deuxième bâti 10'. Notamment, la translation et l'orientation du premier bâti 10 permettent de positionner le premier bâti 10 dans un espace à deux voire trois dimensions.

Pour cela, la première paire 120 et la deuxième paire d'actionneurs peuvent être disposés selon une direction parallèle à l'axe longitudinal (x) du robot 1. Les actionneurs de la première paire 120, voire de la deuxième paire 121 sont par ailleurs indépendamment actionnable en translation selon l'axe longitudinal de chaque actionneur linéaire.

En outre, chaque actionneur de la première paire 120 et de la deuxième paire 121 peut être configuré de façon à être à être libre en rotation, sur au moins un secteur angulaire, relativement au premier bâti 10 et au deuxième bâti 10', autour d'un axe perpendiculaire à l'axe longitudinal x du robot 1.

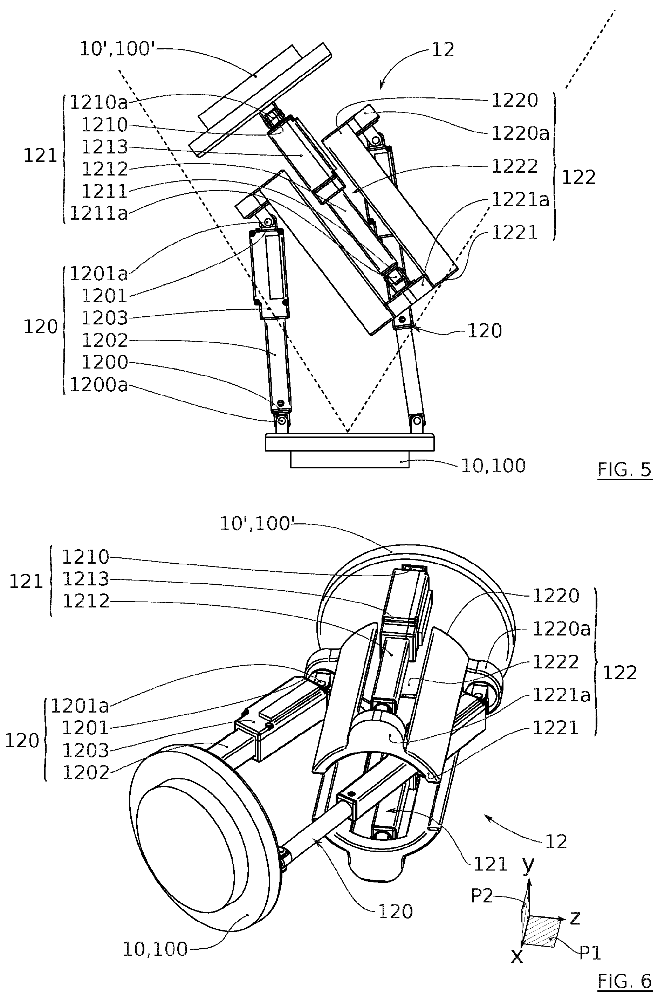

Ainsi, le premier bâti 10 peut être positionné dans un espace délimité par la capacité d'extension d'au moins un actionneur linéaire de la première paire 120 et/ou de la deuxième paire 130, et par au moins le secteur angulaire de liberté en rotation de l'au moins un actionneur. Cet espace est par exemple illustré en pointillé en figure 5.

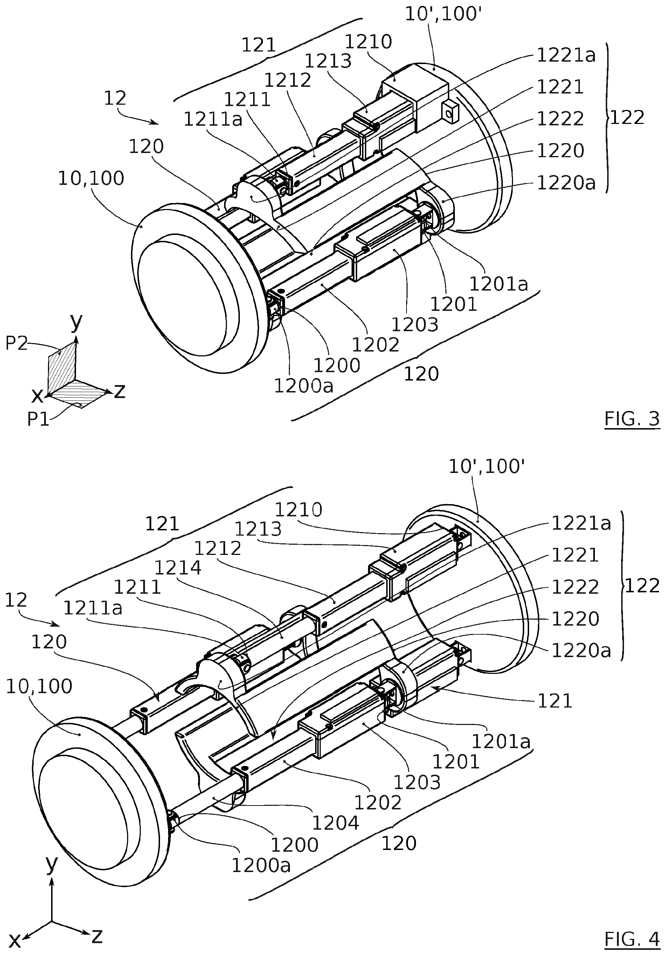

Les actionneurs linéaires sont maintenant décrits en référence aux figures 3 à 6. Chaque actionneur de la première paire 120 et de la deuxième paire 121 peut comprendre respectivement un corps 1202, 1212, un bloc moteur 1203, 1213 et une projection coulissante 1204, 1214. Le bloc moteur 1203, 1213 peut être configuré pour actionner le déploiement ou la rétractation de la projection coulissante 1204, 1214 relativement au corps 1202, 1212, selon l'axe longitudinal de l'actionneur linéaire, comme illustré par les figures 3 et 4. Les actionneurs linéaires de la première paire 120 peuvent être d'une longueur sensiblement identique entre eux. Les actionneurs linéaires de la première paire 121 peuvent être d'une longueur sensiblement identique entre eux, voire sensiblement identique à celle de la première paire 120.

Pour que chaque actionneur linéaire de la première paire 120 puisse être configuré de façon à être libre en rotation, sur au moins un secteur angulaire, relativement au premier bâti 10, chaque actionneur de la première paire 120 peut en outre comprendre au moins une première articulation 1200a, de préférence disposée à une première extrémité 1200 de l'actionneur linéaire. Pour que chaque actionneur de la première paire 120 puisse être configuré de façon à être libre en rotation, sur au moins un secteur angulaire, relativement au deuxième bâti 10', chaque actionneur linéaire de la première paire 120 peut comprendre une deuxième articulation 1201a, plus préférentiellement disposée à une deuxième extrémité 1201 de l'actionneur linéaire. La première articulation 1200a et la deuxième articulation 1201a peuvent être configurées de façon à permettre au moins un degré de liberté en rotation de l'actionneur linéaire de la première paire 120 par rapport au premier bâti 10 et au deuxième bâti 10'. Pour cela, la première articulation 1200a et la deuxième articulation 1201a peuvent comprendre une liaison pivot, par exemple selon un axe y perpendiculaire à l'axe longitudinal x, comme illustré par la figure 4.

La première articulation 1200a de la première paire 120 d'actionneurs linéaires peut être montée sur le premier bâti 10, directement ou par l'intermédiaire d'un socle 100, décrit plus en détail dans la suite. La deuxième articulation 1201a de la première paire 120 d'actionneurs linéaires peut être montée sur le deuxième bâti 10' ou montée sur un support intermédiaire 122, décrit plus en détail dans la suite.

Pour que chaque actionneur linéaire de la deuxième paire 121 puisse être configuré de façon à être à être libre en rotation, sur au moins un secteur angulaire, relativement au deuxième bâti 10', chaque actionneur de la deuxième paire 121 peut en outre comprendre au moins une première articulation 1210a, de préférence disposée à une première extrémité 1210 de l'actionneur linéaire. Pour que chaque actionneur de la deuxième paire 121 puisse être configuré de façon à être à être libre en rotation, sur au moins un secteur angulaire, relativement au premier bâti 10, chaque actionneur linéaire de la deuxième paire 121 peut comprendre une deuxième articulation 1211a, plus préférentiellement disposée à une deuxième extrémité 1211 de l'actionneur linéaire. La première articulation 1210a et la deuxième articulation 1211a peuvent être configurées de façon à permettre au moins un degré de liberté en rotation de l'actionneur linéaire de la deuxième paire 121 par rapport au premier bâti 10 et au deuxième bâti 10'. Pour cela, la première articulation 1210a et la deuxième articulation 1211a peuvent comprendre une liaison pivot, par exemple selon un axe z perpendiculaire à l'axe longitudinal x, comme illustré par la figure 4.

La première articulation 1210a de la deuxième paire 121 d'actionneurs linéaires peut être montée sur le deuxième bâti 10', directement ou par l'intermédiaire d'un socle 100', décrit plus en détail dans la suite. La deuxième articulation 1211a de la deuxième paire 121 d'actionneurs linéaires peut être montée sur le premier bâti 10 ou montée sur un support 122 intermédiaire décrit plus en détail dans la suite.

La première articulation 1200a, 1210a de la première paire 120 et/ou de la deuxième paire 121 d'actionneurs linéaires peut être configurée pour s'insérer dans un boîtier. Ce boîtier est notamment configuré pour limiter le débattement de l'actionneur sur lequel il est monté, par rapport à l'axe longitudinal du x du robot 1. Pour cela, et comme illustré dans la figure 3, ce boîtier peut plus particulièrement comprendre une première paroi et une deuxième paroi, disposées de part et d'autre de l'actionneur, parallèlement au plan P2, et une paroi transversale reliant la première paroi et la deuxième paroi. La paroi transversale peut ainsi mettre en butée l'actionneur sur lequel le boîtier est monté.

Au moins un parmi le premier bâti 10 et le deuxième bâti 10' peut comprendre un socle 100, 100'. De préférence, le premier bâti 10 et le deuxième bâti 10' peuvent chacun comprendre un socle 100, 100'. Chaque socle 100, 100' peut être configuré de façon à être mobile selon un mouvement de rotation autour d'un axe parallèle à l'axe longitudinal x du robot, ou de façon équivalente parallèle à l'axe longitudinal x, x' de l'au moins un parmi le premier bâti 10 et le deuxième bâti 10'. Chaque socle 100, 100' peut être configuré de façon à être mobile selon un mouvement de rotation sur au moins un intervalle angulaire. La rotation de chaque socle 100, 100' peut permettre d'entraîner le système de positionnement 12 en rotation autour de l'axe longitudinal x du robot. Comme illustré dans la figure 2, lorsque que le robot 1 progresse au niveau d'un virage du conduit 2, au moins l'une parmi la première paire 120 et la deuxième paire 121 d'actionneurs peut être placée dans le plan principal du virage du conduit, incluant les axes longitudinaux du conduit 2 de part et d'autre du virage. L'intervalle angulaire de rotation de chaque socle est par exemple compris entre 30° et 120°, préférentiellement l'intervalle angulaire est sensiblement égal à 90°. De préférence, les intervalles angulaires des socles 100, 100' du premier bâti 10 et du deuxième bâti 10' sont égaux.

Lorsque le premier bâti 10 et le deuxième bâti 10' comprennent chacun un socle 100, 100', le mouvement de rotation de chaque socle 100, 100' peut s'effectuer quand les modules de prise d'appui 11 du premier bâti 10 et du deuxième bâti 10' sont dans la configuration d'engagement de la portion d'appui 110, pour que la première paire 120 et la deuxième paire 121 d'actionneurs linéaires restent alignées avec l'axe longitudinal du conduit 2. Ainsi, le risque que le bâti 10 heurte la paroi 20 du conduit 2 est limité, voire évité. Selon cet exemple, le mouvement de rotation du socle 100 du premier bâti 10 et celui du socle 100' du deuxième bâti 10' peuvent être simultanés.

Selon l'exemple illustré par la figure 2, chaque socle 100, 100' peut comprendre une première portion circulaire 1000, 1000' et une deuxième portion circulaire 1001, 1001', montées de façon solidaire et de préférence juxtaposées. Les actionneurs linéaires de la première paire 120 et de la deuxième paire 121 peuvent être montés sur la deuxième portion 1001, 1001' de chaque socle 100, 100'. Pour le premier bâti 10, la première portion circulaire 1000 peut être entraînée en rotation selon l'axe longitudinal du premier bâti 10, sur l'intervalle angulaire. Pour le deuxième bâti 10', la première portion circulaire 1000' peut être entraînée en rotation selon l'axe longitudinal du premier bâti 10', sur l'intervalle angulaire. Par exemple, le premier bâti 10 et le deuxième bâti 10' peuvent chacun comprendre un moteur, non représenté sur les figures, de sorte que chaque première portion circulaire 1000, 1000' est entrainée par ce moteur.

La première paire 120 peut être disposée dans un premier plan P1 et la deuxième paire 121 peut être disposée dans un deuxième plan P2, le premier plan P1 étant distinct du deuxième plan P2. Dès lors, la capacité d'extension d'au moins un actionneur linéaire de la première paire 120 et d'au moins un actionneur linéaire de la deuxième paire 130, ainsi que le secteur angulaire de liberté en rotation de ces actionneurs par rapport au premier bâti 10 et au deuxième bâti 10' permet de définir un espace en trois dimensions, dans lequel le premier bâti 10 peut être positionné. Cet espace peut être défini comme un cône à section ellipsoïdale, de droite génératrice parallèle à l'axe longitudinal du robot et le sommet étant un point à l'intersection entre le premier plan P1 et le deuxième plan P2. La mobilité relative du premier bâti 10 et du deuxième bâti 10' est ainsi améliorée.

Afin d'améliorer encore la mobilité relative du premier bâti 10 et du deuxième bâti 10', les plans P1 et P2 peuvent être perpendiculaires, comme illustré en figure 3 et 6. L'espace dans lequel le premier bâti 10 peut être orienté est ainsi maximisé dans toutes les directions perpendiculaires à l'axe longitudinal du robot. Cet espace peut dès lors être défini comme un cône à section circulaire, de droite génératrice parallèle à l'axe longitudinal du robot et le sommet étant un point à l'intersection entre le premier plan P1 et le deuxième plan P2. Par exemple, le premier bâti 10 peut être positionné dans un cône de révolution dont l'angle au sommet est de sensiblement 60° par rapport à l'axe longitudinal x' du deuxième bâti 10'.

Le système de positionnement 12 peut en outre comprendre un support 122 intermédiaire. Le support 122 intermédiaire est configuré de façon à exploiter au moins en partie la capacité d'extension d'au moins un actionneur linéaire de chacune des première paire 120 et deuxième paire 121, afin d'augmenter l'espace dans lequel le premier bâti 10 peut être positionné. Pour cela, la première paire 120 et la deuxième paire 121 d'actionneurs linéaires peuvent être montées sur le support 122 de façon à être disposées de part et d'autre du support 122, selon une direction parallèle à l'axe longitudinal x du robot 1. En outre, la première paire 120 et la deuxième paire 121 d'actionneurs linéaires peuvent être montées sur le support 122, de façon à être libre en rotation sur au moins un secteur angulaire relativement au support 122, autour d'un axe perpendiculaire à l'axe longitudinal x du robot 1.

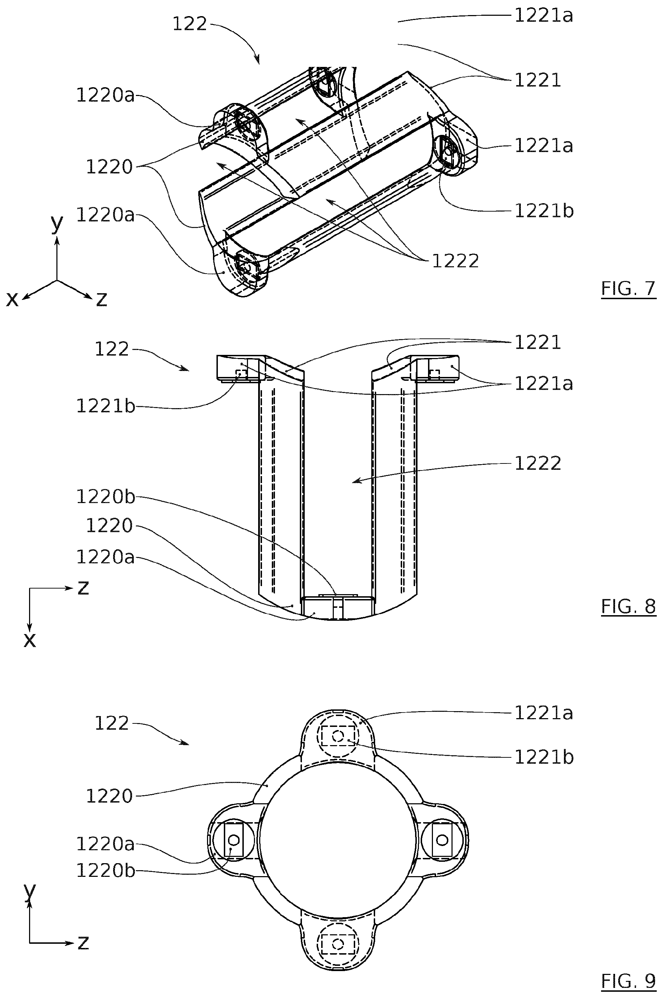

Le support 122 est maintenant décrit en détail en référence aux figures 3 à 9. Le support 122 peut être disposé entre le premier bâti 10 et le deuxième bâti 10', son axe longitudinal pouvant être parallèle aux axes longitudinaux x et x' du premier bâti 10 et du deuxième bâti 10', lorsque le premier bâti 10 et le deuxième bâti 10' sont alignés. Le support 122 peut être de forme générale cylindrique, comme illustré par les figures 7 à 9. Le support comprend une première base 1220 et une deuxième base 1221. La première paire 120 d'actionneur linéaire peut être montée sur la première base 1220. La deuxième paire 121 d'actionneurs linéaires étant montée sur la deuxième base 1221, comme illustré par les figures 3 à 6. La longueur du support 122 entre la première et la deuxième base est de préférence inférieure à la longueur d'un actionneur linéaire.

En outre, le support est configuré de sorte que, lorsque les actionneurs de la première paire 120 et de la deuxième paire 121 sont rétractés, la longueur du système de positionnement 12 est inférieure à la somme des longueurs des actionneurs de la première paire 120 et de la deuxième paire 121 lorsqu'ils sont rétractés. Ainsi, le volume du système de positionnement 12, selon l'axe longitudinal x du robot 1, peut être réduit. Par conséquent, la compacité du robot peut être améliorée. Pour cela, la première base 1220 est disposée en vis-à-vis du deuxième bâti 10', et la deuxième base 1221 est disposée en vis-à-vis du premier bâti 10, lorsque le premier bâti 10 et le deuxième bâti sont alignés, comme illustré par la figure 3.

La première base 1220 et la deuxième base 1221 comprennent chacune des reliefs 1220a, 1221a. qui forment des extensions latérales. Selon l'exemple illustré par les figures 7 à 9, ces reliefs 1220a, 1221a sont disposés dans le plan respectivement de la première base 1220 et de la deuxième base 1221. Ces reliefs 1220a, 1221a comprennent en outre des éléments de liaison 1220b, 1221b, sur lesquels les articulations 1201a de la première paire 120 d'actionneurs linéaires et les articulations 1211a de la deuxième paire 121 d'actionneurs linéaires peuvent être montées.

Le support 122 peut comprendre des ouvertures 1222 configurées de façon à permettre le passage de chaque actionneur linéaire de la première paire 120 et de la deuxième paire 121, lors d'un mouvement de rotation de ces actionneurs relativement au support 122. Le support comprend par exemple deux paires d'ouvertures 1222, une première paire d'ouvertures 1222 étant située dans le plan de la première paire 120 d'actionneurs linéaires, et la deuxième paire d'ouvertures 1222 étant située dans le plan de la deuxième paire 121 d'actionneurs linéaires, comme illustré en figure 6. Comme illustré sur les figures 7 et 8, la première paire d'ouverture 1222 peut partir du relief 1221a de la deuxième base 1221 jusqu'à traverser la première base 1220. La deuxième paire d'ouverture 1222 peut partir du relief 1220a de la première base 1220 jusqu'à traverser la deuxième base 1221.

Le robot 1 peut en outre comprendre un dispositif de mesure, propre à mesurer l'orientation du conduit 2. Ce dispositif de mesure peut être porté par au moins l'un parmi le premier bâti 10 et le deuxième bâti 10'. Ainsi la cartographie du conduit 2 peut être mesurée par le robot 1. Le robot 1 peut en outre enregistrer le parcours effectué, notamment pour revenir à son point d'introduction dans le conduit 2. Par exemple, le dispositif de mesure peut permettre le mesurer les actionnements relatifs de la première paire 120 et la deuxième paire 121 d'actionneurs. Selon un autre exemple, le dispositif de mesure peut comprendre des capteurs de distance propres à mesurer la distance entre le robot et la paroi 20 du conduit 2, en plusieurs points du robot.

Le robot 1 peut comprendre un régulateur configuré pour actionner indépendamment chaque actionneur linéaire de la première paire 120 et de la deuxième paire 121, ainsi qu'une source d'énergie. Ainsi, le déplacement du robot 1 peut être fait de façon autonome. Il n'est alors pas nécessaire de piloter à distance le robot 1 pour qu'il explore les canalisations. **En** outre, il n'est pas nécessaire d'avoir une connexion à distance avec le robot. Le régulateur peut notamment communiquer avec le dispositif de mesure de façon à positionner le premier bâti 10 selon l'orientation du conduit, mesurée par le dispositif de mesure. Selon un exemple, le régulateur est un régulateur PID.

Au vu de la description qui précède, il apparaît clairement que l'invention propose une solution pour améliorer la mobilité d'un robot 1 d'exploration de conduit, et notamment pour améliorer la mobilité relative du premier bâti 10 et du deuxième bâti 10'. Par ailleurs, cette mobilité d'adapter le déplacement du robot 1 à la configuration du conduit 2, ce qui peut notamment permettre une exploration efficace des canalisations.

L'invention n'est pas limitée aux modes de réalisations précédemment décrits et s'étend à tous les modes de réalisation couverts par les revendications.

On peut notamment prévoir que le robot comprenne plus de deux bâtis, ces bâtis pouvant éventuellement être reliés, par exemple deux à deux, par un système de positionnement. On peut en outre prévoir qu'un système de positionnement comprenne plus de deux paires d'actionneurs linéaires. Par exemple, au moins un système de positionnement peut comprendre trois paires d'actionneurs linéaires. On peut aussi prévoir que le système de positionnement comprenne au moins un support intermédiaire supplémentaire, les supports intermédiaires se succédant entre le premier bâti et le deuxième bâti, les liaisons entre les supports intermédiaires pouvant être formées par des paires d'actionneurs additionnelles.

Par ailleurs, les articulations des actionneurs peuvent présenter plus d'un degré de liberté en rotation par rapport à au moins un des bâtis. Au moins une articulation peut par exemple être une articulation à bille.

Selon un exemple, la première paire d'actionneurs linéaires 120 peut être disposée dans un premier plan P1 et la deuxième paire d'actionneurs linéaires 121 peut être disposée dans un deuxième plan P2, le premier plan P1 étant parallèle, voire confondu au deuxième plan P2. De façon synergique avec le support intermédiaire 122 précédemment décrit, l'amplitude d'orientation relative du premier bâti 10 et du deuxième bâti 10', dans un plan parallèle ou confondu aux plans P1 et P2, peut être augmentée par rapport à deux paires d'actionneurs disposées dans deux plans distincts. Notamment, cette amplitude peut être doublée. En outre, la rigidité du système de positionnement 12 est améliorée. De façon synergique avec le socle 100, 100' précédemment décrit, le premier bâti 10 et le deuxième bâti 10' peuvent être orienté relativement en trois dimensions, par révolution autour de l'axe de rotation du socle 100, 110'.

### LISTE DES REFERENCES

- 1.: Robot
- 10.: Premier Bâti
- 10'.: Deuxième Bâti
- 100, 100'.: Socle
- 1000, 1000'.: Première portion
- 1001, 1001'.: Deuxième portion
- 11.: Module de prise d'appui
- 110.: Portion d'appui
- 111.: Bras
- 12.: Système de positionnement
- 120.: Première paire d'actionneurs linéaires
- 1200.: Première extrémité
- 1200a.: Articulation
- 1201.: Deuxième extrémité
- 1201a.: Articulation
- 1202.: Corps
- 1203.: Bloc moteur
- 1204.: Projection coulissante
- 121.: Deuxième paire d'actionneurs linéaires
- 1210.: Première extrémité
- 1210a.: Articulation
- 1211.: Deuxième extrémité
- 1211a.: Articulation
- 1212.: Bloc fixe
- 1213.: Bloc moteur
- 1214.: Projection coulissante
- 122.: Support intermédiaire
- 1220.: Première base
- 1220a.: Relief
- 1220b.: Élément de fixation
- 1221.: Deuxième base
- 1221a.: Relief
- 1221b.: Élément de fixation
- 1222.: Ouverture
- 2.: Conduit
- 20.: Paroi

## Revendications

1. Robot (1) d'exploration de conduit (2) comprenant :
- un premier bâti (10) et un deuxième bâti (10'), le premier bâti (10) et le deuxième bâti (10') comprenant chacun un module de prise d'appui (11), le module de prise d'appui (11) étant doté d'une portion d'appui (110) applicable sur une paroi (20) du conduit (2), chaque module de prise d'appui (11) étant configuré pour passer alternativement d'une configuration d'engagement de la portion d'appui (110), à une configuration de dégagement de la portion d'appui (110) ;
- au moins un système de positionnement (12) relatif du premier bâti (10) et du deuxième bâti (10'), le système de positionnement (12) reliant le premier bâti (10) et le deuxième bâti (10');
le système de positionnement (12) comprenant au moins une première paire (120) d'actionneurs linéaires disposés selon une direction parallèle à un axe longitudinal (x) du robot (1), ledit axe passant par un centre du premier bâti (10) et un centre du deuxième bâti (10'), lorsque le premier bâti (10) et le deuxième bâti (10') sont alignés, indépendamment actionnables en translation selon l'axe longitudinal de chaque actionneur linéaire de la première paire (120), et configurés de de façon à être libres en rotation, sur au moins un secteur angulaire, relativement à au moins l'un parmi le premier bâti (10) et le deuxième bâti (10'), autour d'un axe perpendiculaire à l'axe longitudinal (x) du robot (1), de façon à positionner relativement le premier bâti (10) et le deuxième bâti (10'),
le système de positionnement (12) comprenant une deuxième paire (121) d'actionneurs linéaires, disposés selon une direction parallèle à l'axe longitudinal (x) du robot (1), indépendamment actionnables en translation selon l'axe longitudinal de chaque actionneur linéaire de la deuxième paire (121), et configurés de façon à être libres en rotation, sur au moins un secteur angulaire, relativement à au moins l'un parmi le premier bâti (10) et le deuxième bâti (10'), autour d'un axe perpendiculaire à l'axe longitudinal (x) du robot (1),
le système de positionnement (12) comprenant en outre un support intermédiaire (122), la première paire (120) d'actionneurs linéaires étant montée sur le premier bâti (10) par une première portion (1200), la deuxième paire d'actionneurs linéaires (121) étant montée sur le deuxième bâti (10') par une première portion (1210), la première paire (120) et la deuxième paire (121) d'actionneurs linéaires étant chacune montée sur le support intermédiaire (122) par une deuxième portion (1201, 1211), de sorte que la première paire (120) et la deuxième paire (121) d'actionneurs linéaires sont disposées de part et d'autre du support intermédiaire (122), selon une direction parallèle à l'axe longitudinal (x) du robot (1), et
le robot étant **caractérisé en ce que** le support (122) comprend une première base (1220) et une deuxième base (1221), la première paire (120) d'actionneur linéaire étant montée sur la première base (1220) et la deuxième paire (121) d'actionneurs linéaires étant montée sur la deuxième base (1221), le support étant configuré de sorte que la longueur du système de positionnement (12) selon l'axe longitudinal (x) du robot (1) soit inférieure à la somme des longueurs d'au moins un actionneur de la première paire (120) et d'au moins un actionneur de la deuxième paire (121).

2. Robot (1) selon la revendication précédente, dans lequel le système de positionnement (12) est configuré au moins de façon à positionner l'un parmi le premier bâti (10) et le deuxième bâti (10'), l'un parmi le premier bâti (10) et le deuxième bâti (10') étant dans la configuration de dégagement de la portion d'appui (110), relativement à l'autre parmi le premier bâti (10) et le deuxième bâti (10'), l'autre parmi le premier bâti (10) et le deuxième bâti (10') étant dans la configuration d'engagement de la portion d'appui (110).

3. Robot (1) selon l'une quelconque des revendications précédentes, dans lequel chaque actionneur linéaire de ladite première paire (120) est libre en rotation, sur au moins un secteur angulaire, relativement au premier bâti (10) et au deuxième bâti (10'), selon au moins une direction perpendiculaire à l'axe longitudinal (x) du robot (1).

4. Robot (1) selon l'une quelconque des revendications précédentes, dans lequel au moins l'un parmi le premier bâti (10) et le deuxième bâti (10') comprend un socle (100, 100'), la première paire d'actionneurs (120) étant reliée à au moins l'un parmi le premier bâti (10) et le deuxième bâti (10') par l'intermédiaire du socle (100, 100').

5. Robot (1) selon la revendication précédente, dans lequel, le socle (100, 100') est configuré pour être mobile selon un mouvement de rotation autour d'un axe parallèle à l'axe longitudinal (x) du robot (1), sur au moins un intervalle angulaire.

6. Robot (1) selon l'une quelconque des revendications précédentes, dans lequel la première paire (120) d'actionneurs linéaires est disposée dans un premier plan (P1) et la deuxième paire (121) d'actionneurs linéaires est disposée dans un deuxième plan (P2), le premier plan (P1) étant distinct du deuxième plan (P2).

7. Robot (1) selon la revendication précédente, dans lequel le premier plan (P1) et le deuxième plan (P2) sont perpendiculaires.

8. Robot (1) selon l'une quelconque des revendications précédentes, dans lequel au moins une parmi la première paire (120) et la deuxième paire (121) d'actionneurs linéaires est montée sur le support intermédiaire (122), de façon à être libre en rotation sur au moins un secteur angulaire relativement au support intermédiaire (122), autour d'un axe perpendiculaire à l'axe longitudinal (x) du robot (1).

9. Robot (1) selon la revendication précédente, dans lequel le support (122) est configuré de sorte qu'au moins une parmi la première paire (120) et la deuxième paire (121) d'actionneurs linéaires est libre en rotation, sur l'au moins un secteur angulaire, relativement au support intermédiaire (122).

10. Robot (1) selon la revendication précédente, dans lequel le support comprend une pluralité d'ouvertures configurées de façon à permettre le passage de chaque actionneur linéaire d'au moins une parmi la première paire (120) et la deuxième paire (121), lors d'un mouvement de rotation, sur l'au moins un secteur angulaire, relativement au support intermédiaire (122), autour de l'axe perpendiculaire à l'axe longitudinal (x) du robot (1).

11. Robot (1) selon l'une quelconque des revendications précédentes, dans lequel, le robot comprend en outre un dispositif de mesure, propre à mesurer l'orientation du conduit (2).

12. Robot (1) selon l'une quelconque des revendications précédentes, dans lequel, le robot comprend en outre un régulateur configuré pour actionner indépendamment chaque actionneur linéaire de l'au moins une première paire (120).

## Patentansprüche

1. Roboter (1) zur Kanaluntersuchung (2), umfassend:
- ein erstes Gestell (10) und ein zweites Gestell (10'), wobei das erste Gestell (10) und das zweite Gestell (10') jeweils ein Stützaufnahmemodul (11) umfassen, wobei das Stützaufnahmemodul (11) einen Stützabschnitt (110) aufweist, der an einer Wand (20) des Kanals (2) angebracht werden kann, wobei jedes Stützaufnahmemodul (11) so konfiguriert ist, dass es abwechselnd von einer Eingriffskonfiguration des Stützabschnitts (110) zu einer Lösekonfiguration des Stützabschnitts (110) wechselt;
- mindestens ein relatives Positionierungssystem (12) des ersten Gestells (10) und des zweiten Gestells (10'), wobei das Positionierungssystem (12) das erste Gestell (10) und das zweite Gestell (10') verbindet;
wobei das Positionierungssystem (12) mindestens ein erstes Paar (120) von Linearaktuatoren umfasst, die in einer Richtung parallel zu einer Längsachse (x) des Roboters (1) angeordnet sind, wobei die Achse durch ein Zentrum des ersten Gestells (10) und ein Zentrum des zweiten Gestells (10') verläuft, wenn das erste Gestell (10) und das zweite Gestell (10') ausgerichtet sind, die unabhängig voneinander in der Translation entlang der Längsachse jedes Linearaktuators des ersten Paares (120) betätigt werden können und so konfiguriert sind, dass sie sich über mindestens einen Winkelsektor relativ zu mindestens einem des ersten Gestells (10) und des zweiten Gestells (10') um eine zur Längsachse (x) des Roboters (1) senkrechte Achse frei drehen können, um das erste Gestell (10) und das zweite Gestell (10') relativ zueinander zu positionieren, wobei das Positionierungssystem (12) ein zweites Paar (121) von Linearaktuatoren umfasst, die in einer Richtung parallel zur Längsachse (x) des Roboters (1) angeordnet sind, die unabhängig voneinander in der Translation entlang der Längsachse jedes Linearaktuators des zweiten Paares (121) betätigt werden können und so konfiguriert sind, dass sie sich über mindestens einen Winkelsektor relativ zu mindestens einem des ersten Gestells (10) und des zweiten Gestells (10') um eine zur Längsachse (x) des Roboters (1) senkrechte Achse frei drehen können,
wobei das Positionierungssystem (12) ferner eine Zwischenhalterung (122) umfasst, wobei das erste Paar (120) von Linearaktuatoren durch einen ersten Abschnitt (1200) an dem ersten Gestell (10) montiert ist, wobei das zweite Paar (121) von Linearaktuatoren durch einen ersten Abschnitt (1210) an dem zweiten Gestell (10') montiert ist, wobei das erste Paar (120) und das zweite Paar (121) von Linearaktuatoren jeweils durch einen zweiten Abschnitt (1201, 1211) an der Zwischenhalterung (122) montiert sind, so dass das erste Paar (120) und das zweite Paar (121) von Linearaktuatoren auf beiden Seiten der Zwischenhalterung (122) in einer Richtung parallel zu der Längsachse (x) des Roboters (1) angeordnet sind, und
wobei der Roboter **dadurch gekennzeichnet ist, dass** die Halterung (122) eine erste Basis (1220) und eine zweite Basis (1221) umfasst, wobei das erste Paar (120) von Linearaktuatoren an der ersten Basis (1220) montiert ist und das zweite Paar (121) von Linearaktuatoren an der zweiten Basis (1221) montiert ist, wobei die Halterung so konfiguriert ist, dass die Länge des Positionierungssystems (12) entlang der Längsachse (x) des Roboters (1) kleiner als die Summe der Längen von mindestens einem Aktuator des ersten Paares (120) und mindestens einem Aktuator des zweiten Paares (121) ist.

2. Roboter (1) nach dem vorhergehenden Anspruch, wobei das Positionierungssystem (12) mindestens so konfiguriert ist, dass es eines des ersten Gestells (10) und des zweiten Gestells (10') positioniert, wobei eines des ersten Gestells (10) und des zweiten Gestells (10') in der Lösekonfiguration des Stützabschnitts (110) relativ zu dem anderen des ersten Gestells (10) und des zweiten Gestells (10') ist, wobei das andere des ersten Gestells (10) und des zweiten Gestells (10') in der Eingriffskonfiguration des Stützabschnitts (110) ist.

3. Roboter (1) nach einem der vorhergehenden Ansprüche, wobei sich jeder Linearaktuator des ersten Paares (120) über mindestens einen Winkelsektor relativ zu dem ersten Gestell (10) und zu dem zweiten Gestell (10') in mindestens einer Richtung senkrecht zu der Längsachse (x) des Roboters (1) frei drehen kann.

4. Roboter (1) nach einem der vorhergehenden Ansprüche, wobei mindestens eines des ersten Gestells (10) und des zweiten Gestells (10') einen Sockel (100, 100') umfasst, wobei das erste Paar von Aktuatoren (120) über den Sockel (100, 100') mit mindestens einem von dem ersten Gestell (10) und dem zweiten Gestell (10') verbunden ist.

5. Roboter (1) nach dem vorhergehenden Anspruch, wobei der Sockel (100, 100') so konfiguriert ist, dass er in einer Drehbewegung um eine Achse parallel zu der Längsachse (x) des Roboters (1) über mindestens ein Winkelintervall beweglich ist.

6. Roboter (1) nach einem der vorhergehenden Ansprüche, wobei das erste Paar (120) von Linearaktuatoren in einer ersten Ebene (P1) angeordnet ist und das zweite Paar (121) von Linearaktuatoren in einer zweiten Ebene (P2) angeordnet ist, wobei die erste Ebene (P1) von der zweiten Ebene (P2) getrennt ist.

7. Roboter (1) nach dem vorhergehenden Anspruch, wobei die erste Ebene (P1) und die zweite Ebene (P2) senkrecht sind.

8. Roboter (1) nach einem der vorhergehenden Ansprüche, wobei mindestens eines des ersten Paars (120) und des zweiten Paars (121) von Linearaktuatoren an der Zwischenhalterung (122) montiert ist, so dass es sich über mindestens einen Winkelsektor relativ zu der Zwischenhalterung (122) um eine zu der Längsachse (x) des Roboters (1) senkrechte Achse frei drehen kann.

9. Roboter (1) nach dem vorhergehenden Anspruch, wobei die Halterung (122) so konfiguriert ist, dass sich mindestens eines des ersten Paars (120) und des zweiten Paars (121) von Linearaktuatoren über den mindestens einen Winkelsektor relativ zur Zwischenhalterung (122) frei drehen kann.

10. Roboter (1) nach dem vorhergehenden Anspruch, wobei die Halterung eine Vielzahl von Öffnungen umfasst, die so konfiguriert sind, dass sie das Passieren jedes Linearaktuators von mindestens einem der ersten Paare (120) und des zweiten Paares (121) bei einer Drehbewegung über den mindestens einen Winkelsektor relativ zur Zwischenhalterung (122) um die zur Längsachse (x) des Roboters (1) senkrechte Achse ermöglichen.

11. Roboter (1) nach einem der vorhergehenden Ansprüche, wobei der Roboter ferner eine Messvorrichtung umfasst, die geeignet ist, die Ausrichtung des Kanals (2) zu messen.

12. Roboter (1) nach einem der vorhergehenden Ansprüche, wobei der Roboter ferner einen Regler umfasst, der so konfiguriert ist, dass er jeden Linearaktuator des mindestens einen ersten Paares (120) unabhängig voneinander antreibt.

## Claims

1. Robot (1) for exploring a conduit (2), comprising:
- a first frame (10) and a second frame (10'), the first frame (10) and second frame (10') each comprising a bearing module (11), the bearing module (11) being equipped with a bearing portion (110) that can be applied to a wall (20) of the conduit (2), each bearing module (11) being configured to alternately switch from a configuration of engagement of the bearing portion (110) to a configuration of disengagement of the bearing portion (110);
- at least one system (12) for relative positioning of the first frame (10) and the second frame (10'), the positioning system (12) connecting the first frame (10) and the second frame (10');
the positioning system (12) comprising at least one first pair (120) of linear actuators disposed in a direction parallel to a longitudinal axis (x) of the robot (1), said axis passing through a centre of the first frame (10) and a centre of the second frame (10'), when the first frame (10) and the second frame (10') are aligned, independently translatable along the longitudinal axis of each linear actuator of the first pair (120), and configured so as to be free to rotate, over at least one angular sector, relative to at least one of the first frame (10) and the second frame (10'), about an axis perpendicular to the longitudinal axis (x) of the robot (1), so as to position the first frame (10) and the second frame (10') relatively, the positioning system (12) comprising a second pair (121) of linear actuators, arranged in a direction parallel to the longitudinal axis (x) of the robot (1), independently translatable along the longitudinal axis of each linear actuator of the second pair (121), and configured so as to be able to be free to rotate, over at least one angular sector, relative to at least one of the first frame (10) and the second frame (10'), about an axis perpendicular to the longitudinal axis (x) of the robot (1),
the positioning system (12) further comprising an intermediate support (122), the first pair (120) of linear actuators being mounted on the first frame (10) via a first portion (1200), the second pair (121) of linear actuators being mounted on the second frame (10') via a first portion (1210), the first pair (120) and the second pair (121) of linear actuators each being mounted on the intermediate support (122) via a second portion (1201, 1211), such that the first pair (120) and the second pair (121) of linear actuators are arranged on either side of the intermediate support (122), in a direction parallel to the longitudinal axis (x) of the robot (1), and
the robot being **characterised in that** the support (122) comprises a first base (1220) and a second base (1221), the first pair (120) of linear actuators being mounted on the first base (1220) and the second pair (121) of linear actuators being mounted on the second base (1221), the support being configured such that the length of the positioning system (12) along the longitudinal axis (x) of the robot (1) is less than the sum of the lengths of at least one actuator from the first pair (120) and at least one actuator from the second pair (121).

2. Robot (1) according to the preceding claim, wherein the positioning system (12) is configured at least so as to position one from the first frame (10) and the second frame (10'), one from the first frame (10) and the second frame (10') being in the configuration of disengagement of the bearing portion (110), relative to the other from the first frame (10) and the second frame (10'), the other one from the first frame (10) and the second frame (10') being in the configuration of engagement of the bearing portion (110).

3. Robot (1) according to any one of the preceding claims, wherein each linear actuator of the first pair (120) is free to rotate, over at least one angular sector, relative to the first frame (10) and to the second frame (10'), in at least one direction perpendicular to the longitudinal axis (x) of the robot (1).

4. Robot (1) according to any one of the preceding claims, wherein at least one of the first frame (10) and the second frame (10') comprises a base (100, 100'), the first pair of actuators (120) being connected to at least one of the first frame (10) and the second frame (10') via the base (100, 100').

5. Robot (1) according to the preceding claim, wherein the base (100, 100') is configured to be movable in a rotational movement about an axis parallel to the longitudinal axis (x) of the robot (1), over at least one angular range.

6. Robot (1) according to any one of the preceding claims, wherein the first pair (120) of linear actuators is arranged in a first plane (P1) and the second pair (121) of linear actuators is arranged in a second plane (P2), the first plane (P1) being distinct from the second plane (P2).

7. Robot (1) according to the preceding claim, wherein the first plane (P1) and the second plane (P2) are perpendicular.

8. Robot (1) according to any one of the preceding claims, wherein at least one of the first pair (120) and the second pair (121) of linear actuators is mounted on the intermediate support (122) in such a way as to be free to rotate over at least one angular sector relative to the intermediate support (122), about an axis that is perpendicular to the longitudinal axis (x) of the robot (1).

9. Robot (1) according to the preceding claim, wherein the support (122) is configured such that at least one from the first pair (120) and the second pair (121) of linear actuators is free to rotate, over at least one angular sector, relative to the intermediate support (122).

10. Robot (1) according to the preceding claim, wherein the support comprises a plurality of openings configured so as to allow the passage of each linear actuator of at least one of the first pair (120) and the second pair (121), during a rotational movement, over the at least one angular sector, relative to the intermediate support (122), about the axis perpendicular to the longitudinal axis (x) of the robot (1).

11. Robot (1) according to any one of the preceding claims, wherein the robot further comprises a measuring device able to measure the orientation of the conduit (2).

12. Robot (1) according to any one of the preceding claims, wherein the robot further comprises a regulator configured to independently actuate each linear actuator of the at least one first pair (120).
